# EUROPEAN PATENT SPECIFICATION

(11) **EP 4 187 108 B1**
(45) Date of publication and mention of the grant of the patent: **11.06.2025**
(21) Application number: 21211029.0
(22) Date of filing: 29.11.2021
(51) Int. Cl.: E04B 9/34, F16B 5/01, F16B 13/02, F16B 21/09, E04B 9/00, E04B 9/20, E04B 9/22

(54) **TILE ELEMENT AND TILE SYSTEM**
KACHELELEMENT UND KACHELSYSTEM
ÉLÉMENT ET SYSTÈME DE TUILE

(43) Date of publication of application: 31.05.2023
(73) Proprietor: Saint-Gobain Ecophon AB, 260 61 Hyllinge (SE)
(72) Inventor: Nilsson, Thomas, 252 49 Helsingborg (SE)
(74) Representative: AWA Sweden AB

(56) References cited:
- EP-A1- 3 584 382
- EP-A1- 3 772 555
- EP-B1- 3 294 966
- DE-T2- 69 604 270
- DE-U1- 202014 000 889
- FR-A1- 2 634 240
- US-B1- 8 413 398

## Description

### Filed of the Invention

The present invention generally relates to a tile element and a tile system.

### Background of the Invention

A tile system in a room or in another accommodation may serve a variety of purposes. One purpose of having a tile system such as a suspended ceiling system may be to conceal an underside of a space, such as another room, which is located above the room. Another purpose may be to provide a desired visual appearance inside a room. Another purpose may be to provide improved noise absorption and/or noise attenuation in and outside of the room. Tile systems for rooms or similar typically also include baffles in form of generally vertically suspended tiles. Such baffles may provide a desired visual appearance and/or provide improved noise absorption.

In case of a suspended ceiling system, the resulting plenum space located between the suspended ceiling and a main ceiling of the room may further be utilized to accommodate e.g. wiring, piping, as well as devices related to heating, ventilation and air condition. Typically, a suspended ceiling consists of a plurality of ceiling tiles which may be suspended from the main ceiling or structural ceiling. The ceiling tiles may be suspended from the main ceiling using wires or lines which are attached to the main ceiling and to the ceiling tiles such that the ceiling tiles become suspended below the main ceiling, thereby forming a suspended ceiling. The ceiling tiles may also be suspended using a profile framework or similar. Also, baffles may be suspended using various kinds of elements.

In order to suspend the tiles of a suspended ceiling system, the ceiling tiles may be provided with a number of fasteners which in turn may be connected to the wires or lines used to suspend the ceiling tiles. The fasteners are commonly fixed to the ceiling tiles using different techniques, such as being glued onto or being screwed into the ceiling tiles. Similarly, baffles are commonly provided with a number of fasteners. According to common practice, the fasteners include some form of eye or hook which is used to connect to wires, lines or similar used to suspend the tiles.

The fasteners must provide a reliable connection to the tiles and at the same time offer a simple connection to the tiles.

The fasteners are commonly attached to the tiles at the construction site prior to installing the tiles. This means that a plurality of fasteners typically has to be connected or fixed to each tile. This work is time-consuming. Also, the length of the wires or lines used must be correctly adjusted to suspend the tiles. This work is time-consuming. The time-consuming work implies high costs due to e.g. personnel expenses.

Further, there is an imminent risk of positioning the fasteners in the wrong position as the installation is often conducted under tight time constraints. Even minor wrongful positioning of the fasteners typically result in severe aesthetic problems since even the slightest misalignment or variation of the tiles is easily noticeable.

Furthermore, there is a risk of wrongful adjustment of the wires or lines. Minor wrongful adjustment of the lines or wires typically also result in aesthetic problems since even small height variations of the tiles is easily noticeable.

It has been suggested to install the fasteners to the tiles off-site to reduce the work labor needed during installation of tiles. It has however proven difficult to achieve desired results as the fasteners are prone to damaging the tiles during e.g. handling, transportation and storage.

It has been suggested to supply wires or lines of certain lengths having pre-mounted hooks. It has however proven difficult to achieve desired results as the conditions at the installation site tends to vary thus requiring at site adjustments of the wires or lines used.

US 8 413 398 B1 discloses ball pivot assemblies for mounting panels to a cable regardless of panel geometry or orientation include a ball pivot. The ball pivot provides a geometry configured to enable a panel to pivot about the ball pivot in a plurality of orientations in a plurality of planes with respect to the cable. Document EP 3584382 A1 discloses another tile element of the prior art.

### Summary of the invention

In view of the above, it is an object of the present invention is to provide an improved tile element and an improved tile system.

Another object is to provide such a tile element and tile system which are less time consuming to install.

Another object is to provide such a tile element and tile system which ensure correct positioning of the anchor elements in relation to the tile element, which in turn ensure a correct positioning of the tile element in relation to the main ceiling or wall.

Another object is to provide such a tile element and tile system which ensure easy height adjustment at the installation site.

Another object is to provide such a tile element and tile system which reduces the risk of damaging the tile elements during handling, transport and storage.

It is also an object to provide a cost-effective tile element and tile system.

To achieve at least one of the above objects and also other objects that will be evident from the following description, a tile element having the features defined in claim 1 is provided according to the present inventive concept. A tile system including a tile element is provided according to claim 15. Preferred variations to the inventive concept will be evident from the dependent claims.

More specifically, according to a first aspect, there is provided a tile element comprising: a tile having a first major surface an opposing second major surface, and at least one side edge surface extending between the first major surface and the second major surface, and an anchor element associated with only one of the first major surface and the second major surface or only one of the at least one side edge surface of the tile element, wherein the anchor element comprises a body supporting a wire lock, wherein the anchor element is arranged in the tile such that the anchor element and the wire lock thereof becomes recessed in the tile and such that an access port of the wire lock becomes accessible from the associated first major surface, second major surface or one of the at least one side edge surface of the tile, and wherein the anchor element being arranged in the tile by being molded, pressed or slotted into the tile.

Hereby an improved tile element is provided.

The tile element comprises a tile having an anchor element associated with only one surface thereof.

The tile of the tile element is having a first major surface, an opposing second major surface and at least one side edge surface extending between the first major surface and the second major surface. In other words, the tile has typically a front side in form of the first major surface, a back side in form of the second major surface and at least one side edge surface. In case of a vertically suspended baffle, the major surfaces are however typically extending vertically and may consequently each be facing the interior of e.g. a room.

It should be noted that within the context of this application the term "tile element" may be any type of element which is being suspendable from a structural ceiling or a wall to e.g. form part of or constitute a suspended ceiling or a set of baffles. The element may be free hanging in the sense that it does not contact any neighboring elements or does not have any neighboring elements. The element may also be suspendable such that is contacts neighboring elements. For natural reasons the same type of elements may be suspended as free hanging elements or as elements being in contact with neighboring elements. Further, the tile of the tile element may exhibit different shapes and may be made of different materials or material combinations. The tile of the tile element may have a hollow interior void of any material. In other words, the tile may be formed of an external shell which at least partially defines and encloses an internal space. Such internal space may be void. Such internal space may be filled with a material different from the exterior shell. The material of the tile or if present the exterior shell may comprise a perforated material. In other words, the tile or one or more external surfaces of the tile may be perforated. Furthermore, the tile of the tile element may be a decorative element and/or an element serving a technical purpose such as sound absorption, fire protection or concealing of piping or wiring.

The anchor element is associated with only one of the first major surface and the second major surface or only one of the at least one side edge surfaces of the tile element. In practice, a plurality of anchor elements is typically used to suspend a tile element. Four anchor elements are commonly used to suspend e.g. a ceiling tile, although any number of anchor elements may be used to advantage.

The anchor element comprises a body. The body may form a major part of the anchor element. The body may be integrally formed, i.e. formed in one piece. The body may be formed of separate parts being joined to form the body of the anchor element. The body of the anchor element may be casted, molded or 3-D printed to give a few non-limiting examples. The body of the anchor element may comprise metal and/or plastics. The body of the anchor element may be made from a single metal or from a metal alloy. The body of the anchor element may be made of a plastic material or of a mixture of plastic materials. The body of the anchor element may be fiber reinforced.

The body may have any suitable shape. The body may rotationally symmetric in a direction transverse to a central axis thereof. The body may be elongated in a direction transverse to the central axis. The body may exhibit a square cross section in normal direction to the central axis. The body may exhibit a rectangular cross section in normal direction to the central axis. The body may exhibit an oblong cross section in normal direction to the central axis. The body may exhibit a curved cross section in normal direction to the central axis. Other shapes apart from the above non-limiting examples may be used to advantage.

The body of the anchor element is supporting a wire lock. In other words, the wire lock is typically fixed and held by the body of the anchor element. Hence, the wire lock is at least partially enclosed and joined with the anchor element. Portions of the wire lock may protrude from the anchor element. The wire lock may be housed within the anchor element. The wire lock may be housed within the body of the anchor element.

It should be noted that within the context of this application the term "wire lock" may be any type of element which is capable of locking a wire, line or similar from being moved in at least on direction. In other words, the wire lock will prevent or counteract the wire or line at hand at least from being extracted from the wire lock without releasing the wire lock. The wire lock may consequently be a one-way wire lock or a two-way wire lock. The wire lock may be a so-called quick fit wire lock operable without any tools. The wire lock may allow insertion of a wire without the use of any tools or any release operation. The wire lock may include screws or similar for locking a line, wire. The wire lock may be made of any suitable material including plastics and metals. The wire lock may include a plurality of materials. The wire lock may include a plurality of parts or elements.

The anchor element is arranged in the tile such that the anchor element and the wire lock thereof becomes recessed in the tile.

In other words, the anchor element will not protrude above the first major surface, the second major surface, or one of the at least one side edge surface of the ceiling tile, or it will only protrude slightly above the first major surface, the second major surface, or one of the at least one side edge surface of the tile element. For instance, the anchor element may include a relatively speaking thin flange which may be arranged to contact the surface of the tile element in which the anchor element is arranged. In this case, the flange may protrude slightly above the surface of the tile element. For instance, the wire lock may include a release member which may extend slightly beyond a top side of the anchor element. In this case, the release member may protrude slightly above the surface of the tile element. This means in turn that no significant portion of the anchor element will protrude above the surface of the tile element.

The wire lock has an access port accessible from the associated first major surface, second major surface or one of the at least one side edge surface of the tile. It should be noted that within the context of this application the term "access port" may be any type of port, opening, hole or similar through which a wire, line or similar may be inserted in the wire lock.

The access port is accessible from the associated first major surface, second major surface or one of the at least one side edge surface of the tile such that a wire, line or similar may be inserted in the wire lock from said first major surface, second major surface or one of the at least one side edge surface of the tile.

The anchor element is arranged in the tile by being molded, pressed or slotted into the tile.

The anchor element may consequently be molded into the tile when the tile is manufactured. The anchor element may be molded into the tile using a molding paste or molding compound. The anchor element may be bolded into an external shell of the tile.

The anchor element may consequently be pressed into the material of the tile. The anchor element may be pressed directly into the material of the tile. The anchor element may be pressed into a dedicated opening or recess of the tile. The anchor element may be pressed partly into the material of the tile and partly into a dedicated opening or recess of the tile. The anchor element may be pressed into an external shell of the tile. The anchor element may be pressed into an external shell of the tile and enter into an interior space of the tile. The anchor element may be pressed into an external shell of the tile, enter into an interior space of the tile and abut an inside of an opposite major surface of the tile.

The anchor element may consequently be slotted into a slot, groove, trench, long hole, recess or similar provided in the tile. The slot, groove, trench, long hole, recess or similar may at least be in part complementary to an external shape of the anchor element. The slot, groove, trench, long hole, recess or similar may generally include overhangs, where the overhangs are configured to prevent or counteract retraction of the anchor element from the tile. The anchor element may be slotted into an external shell of the tile.

By the above arrangement of the anchor element including the wire lock, significant advantages are achieved. The anchor element may be pre-mounted or pre-attached to the tile element at hand, with a significantly reduced risk of damaging the tile during handling, transport, storage etc. This is particularly true when a plurality of tiles is stored and stacked. This because the anchor element is recessed in the respective tiles, meaning that there are no significantly protruding portions which are otherwise prone to damaging the tile itself or other tiles e.g. being stacked on top of the tile concerned. Also, the height of a stack of tiles may be significantly reduced since the tiles may be stacked directly on each other since there are no protruding portions of the anchor elements or portions protruding to a limited extent.

Further, since there are no protruding portions or portions protruding to a limited extent of the anchor element, a reduced installation height or thickness is enabled. This may be a significant advantage in situations where e.g. a suspended ceiling is to be located close to a major ceiling or where a baffle is to occupy as little space as possible.

Furthermore, the fact that the anchor elements of the tile element may be pre-mounted brings about a significantly reduced risk of mounting the anchor elements in an undesired or wrongful position. Further, the installation time may be reduced as compared to when anchor elements are mounted onsite, bringing about a reduced installation cost.

Moreover, the fact that the anchor elements of the tile element includes a wire lock may significantly reduce the work labor when installing the absorber tile element. By this arrangement, a wire, a line, a cable, a cord, a thread, a string, a chain, a rope or similar may easily be coupled to or decoupled from the anchor element of the absorber tile element. The wire lock of the anchor element may consequently simplify installation and reduce installation time, bringing about a reduced installation cost.

The wire lock may define an internal wire lock channel terminating in the access port at a first end and in an outlet port at a second end, and the body may define an internal body channel, the body channel adjoining the outlet port, and being configured to guide a suspension wire through the body, which suspension wire has been passed through the wire lock and introduced into the body channel, which is advantageous in that the suspension wire may be guided through and out of the body of the anchor element in a controlled manner. Moreover, the suspension wire may be made to exit the body of the anchor element in a desired location, and hence in a desired direction, through the body channel. Hence, the suspension wire need not be cut to a certain length where it terminates within the body of the anchor element, which brings about a significantly reduced installation time. Further, a more flexible mounting may be achieved in which a mounting location, e.g. a mounting height, may easily be adjusted. By using a suspension wire having a superfluous length portion, the length of the suspension wire may easily be extended even after installation.

The body channel may be configured to guide the suspension wire through the body such that the suspension wire is deflected in a direction towards a top side of body, which is advantageous in that the suspension wire may be made to exit the bod of the anchor element on the same side as the suspension wire enters the anchor element through the access port of the wire lock. Hence, the suspension wire may be made to exit the anchor element in a concealed way, typically on a back side of the tile element not being visible form a room in which the tile element is installed.

The body channel may be configured to deflect the suspension wire with a bending radius in the range of 3-40 mm, preferably 5-20 mm, which is advantageous in that the suspension wire may be bent in a controlled manner with a bending radius having a reduced risk of damaging the suspension wire or making the suspension wire get stuck.

The body channel may be configured to guide the suspension wire through the body such that the suspension wire is guided in a direction towards a bottom side of the body, which is advantageous in that the suspension wire may be made to exit the anchor element on an opposite side as the suspension wire enters the anchor element through the access port of the wire lock. Hence, the suspension wire may be made to exit the anchor element at a bottom side of the body and further though the tile element. In other words, the suspension wire may be made to exit the tile element typically on a front side thereof being visible form a room in which the tile element is installed. By this arrangement a further tile element or another object may be suspended below the tile element. In other words, a single suspension element for instance in form of a wire, may be used to suspend two or more tile elements below each other.

The wire lock may be housed within the body, which is advantageous in that the wire lock may not protrude beyond the anchor element.

The wire lock may comprise a biased release member protruding beyond a top surface of the body and being provided with the access port, which is advantageous in that the suspension wire may easily be inserted and adjusted. Further, the since the release member may be biased, e.g. spring loaded, the release member may be pushed back into the wire lock for instance when stacking tile elements on top of each other.

The body may be provided with a laterally extending external protrusion, which is advantageous in that the anchor element may be counteracted from being retracted out of the tile and/or counteracted from being pressed further into the tile. Hence, the laterally extending external protrusion may lock the anchor element in relation to the tile.

The laterally extending external protrusion may comprise an element selected from the group consisting of a flange, a barb, a pin and a biased projection, which is advantageous in that an efficient locking of the anchor element in relation to the tile may be achieved.

A portion of the body may have a tapered cross section as seen in a plane coinciding with a longitudinal axis of the body, which is advantageous in that removal of the anchor element form the tile may be counteracted or that insertion of the anchor element into the tile may be facilitated.

The portion of the body may taper as seen along a longitudinal axis of the body towards the access port, which is advantageous in that removal of the anchor element form the tile may be counteracted or prevented.

The portion of the body may taper as seen along a longitudinal axis of the body away from the access port, which is advantageous in that insertion of the anchor element into the tile may be facilitated.

When the body is pressed into the tile, the body may have a cross section facilitating pressing of the anchor element into the tile, which is advantageous in that the anchor element may be pressed into the tile using relatively speaking less force. A cross section facilitating pressing of the anchor element into the tile may thus reduce a risk of damaging the tile when pressing the anchor element into the tile.

The anchor element may for instance have a pointy or sharp end which may act as a leading end when pressing the anchor element into the tile.

When the body is molded into the tile, the body may have a cross section counteracting retraction of the anchor element out of the tile and/or counteracting pressing of the anchor element further into the tile, which is advantageous in that the anchor element may be fixed or held in relation to the tile when being molded into the tile.

The anchor element may for instance have a protrusion, a projection, a rim, a lip or similar. The anchor element may for instance have a cross section having at least a portion which has a lager cross section or circumference as compared to other portions of the anchor element.

The tile may comprise a material selected form the group consisting of mineral fiber, wood fiber, textile fiber, polymer fiber, metal fiber, gypsum, concrete, wood, metal, plastics, cementitious materials, geo-polymeric materials, or combinations thereof, which is advantageous in that properties of the tile may be tailored to suit different needs or desires.

The body may have an extension in the interval of 10-150 mm, preferably 15-100 mm, along a central axis thereof, which is advantageous in that a secure connection to the tile may be provided.

The body may have an extension in the interval of 10-100 mm, preferably 15-60 mm, in a direction transverse to the central axis, which is advantageous in that a secure connection to the tile may be provided.

The body of the anchor element may comprise a wire lock holding member supporting the wire lock, which is advantageous in that wire locks of different sizes and shapes may be fitted to the anchor element by tailoring the wire lock holding member. Further, the technique used to fasten the wire lock to the wire lock holding member may be varied by tailoring the wire lock holding member. Similarly, the way the wire lock holding member is fastened to the body may also be tailored. The fastening of the wire lock to the wire lock holding member and/or the fastening of the wire lock holding member to the body may include threading, snap locking, gluing, soldering, inserting of a lock pin and crimping to give a few non-limiting examples. Also, the material of the body and the wire lock holding member may vary. Suitable materials include plastics and metals. The body and the wire lock holding member may be formed as separate parts or may be integrally formed.

The tile element may comprise compressed fiber material.

The compressed fiber material may comprise fiber selected form the group consisting of mineral fiber, wood fiber, textile fiber, polymer fiber and metal fiber.

The compressed fiber material may be arranged in an external shell where the external shell defines at least one of the first major surface, the second major surface and the at least one side edge surface. Such external shell may comprise metal. Such external shell may comprise perforated metal, such as a perforated metal sheet.

According to another aspect of the invention, there is provided a tile system comprising a tile element according to the first aspect and a suspension wire releasably coupled to the wire lock for suspension of the tile element. In general, features of this aspect of the invention provide similar advantages as discussed above in relation to the previous aspect of the invention. Consequently, said advantages will not be repeated in order to avoid undue repetition.

The suspension wire may have a diameter in the range of 0,5-3 mm, preferably 0,7-1,2 mm, which is advantageous in that a strong, yet flexible suspension may be achieved. Suspension wires with the specified diameters are generally flexible enough to be guided through the above discussed wire lock channel and body channel.

The details and advantages of this aspect of the invention are largely analogous to those of the first aspect of the invention, wherein reference is made to the above.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise.

### Brief Description of the Drawings

The above, as well as additional objects, features and advantages of the present invention, will be better understood through the following illustrative and non-limiting detailed description of preferred variants of the present inventive concept, with reference to the appended drawings, where the same reference numerals will be used for similar elements, wherein:
Fig. 1 conceptually illustrates a tile system in form of a suspended ceiling system.
Fig. 2a is a perspective detail view of an anchor element of the suspended ceiling system of Fig. 1
Fig. 2b is a cross sectional view of the anchor element of Fig. 2a.
Fig. 3a is a perspective detail view of another anchor element of the suspended ceiling system of Fig. 1.
Fig. 3b is a cross sectional view of the anchor element of Fig. 3a.
Fig. 4a is a perspective detail view of yet another anchor element of the suspended ceiling system of Fig. 1.
Fig. 4b is a cross sectional view of the anchor element of Fig. 4a.
Fig. 5a is a perspective detail view of yet another anchor element of the suspended ceiling system of Fig. 1.
Fig. 5b is a cross sectional view of the anchor element of Fig. 4a.
Fig. 6 is a cross sectional detail view of the suspended ceiling system of Fig. 1.
Fig. 7 is a perspective view of a suspended baffle.

### Detailed Description

The present inventive concept will now be described more fully hereinafter with reference to the accompanying drawings, in which preferred variants of the inventive concept are shown. This inventive concept may, however, be embodied in many different forms and should not be construed as limited to the variants set forth herein; rather, these variants are provided for thoroughness and completeness, and fully convey the scope of the inventive concept to the skilled person. Like reference numerals refer to like elements throughout the description.

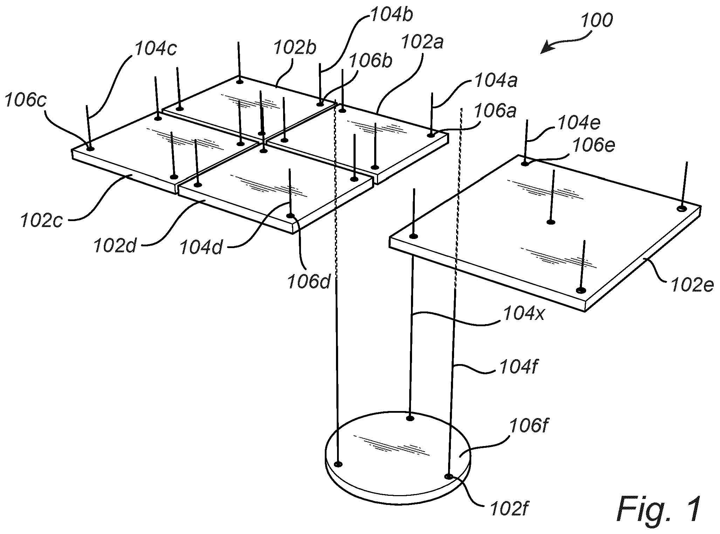

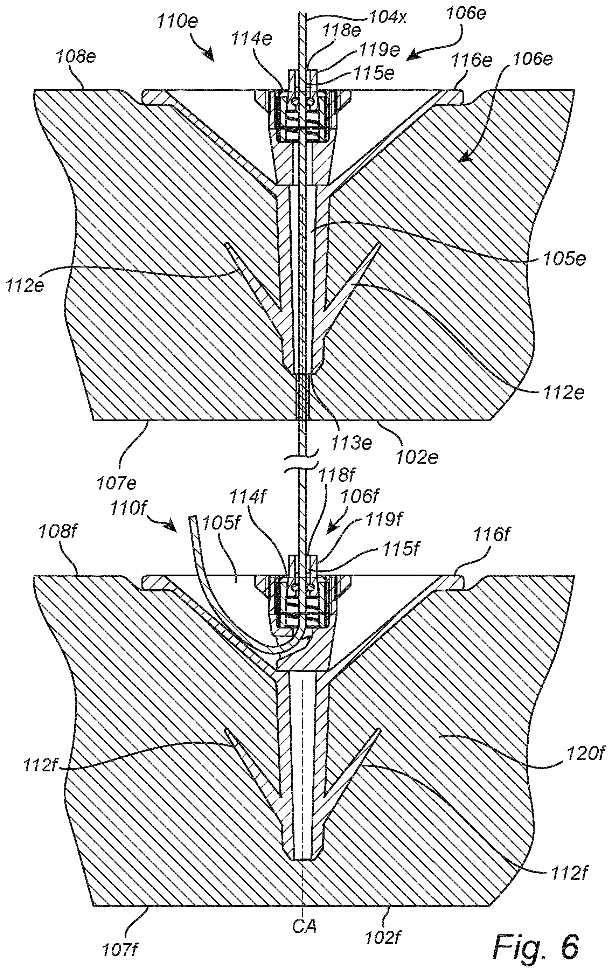

Initially a tile system in form of a suspended ceiling system 100, including tile elements, will be described with reference to Figs. 1-5. Followingly a baffle system 200 will be described with reference to Fig. 6.

Fig. 1 is a schematic perspective view of conceptually depicting a tile system 100 including in form of a suspended ceiling system 100. For reasons of simplicity there are six planar tile elements or objects in form of ceiling tiles 102a-f illustrated in Fig. 1. The ceiling tiles 102a-f illustrated in Fig. 1 may typically be absorber tile elements having sound attenuating properties. It is however to be understood that any number and any type of tile elements, e.g. ceiling tiles, may be used according to the present inventive concept. Each ceiling tile 102a-f has a first major surface intended to face an interior of a room and an opposing second major surface. Further, each ceiling tile 102a-e has four side edge surfaces 109a-e extending between the respective first and second major surfaces. However, ceiling tile 102f has a single side edge surface 109f circumferencing the ceiling tile 102f at an outer periphery thereof and extending between the first and second major surfaces.

Fig 1. Illustrates how the ceiling tiles 102a-f, forming a suspended ceiling, are suspended from a structural ceiling of a building.

Each ceiling tile 102a-f is suspended by means of suspension elements 104a-f, 104x in form of wires. Other relevant examples of suspension elements are a line, a cable, a cord, a thread, a rod, a string, a chain, a rope or a combination thereof. The ceiling tiles 102a-d are suspended using four suspension elements 104a-d each. Ceiling tile 102e is suspended using five suspension elements 104e, whereas ceiling tile 102f is suspended using three suspension elements 104f. Each suspension elements 104a-f are attached to the ceiling tiles in corresponding attachment points. Each attachment point includes an anchor element 106a-f.

Ceiling tile 102f is suspended below ceiling tile 102e, in the sense that ceiling tile 102f is located further below the structural ceiling and partially under ceiling tile 102e. Ceiling tiles 102e and 102f share one suspension element 104x, which is used for suspending both ceiling tile 102e and ceiling tile 102f. The depicted suspension element 104x is a wire like suspension elements 104a-f.

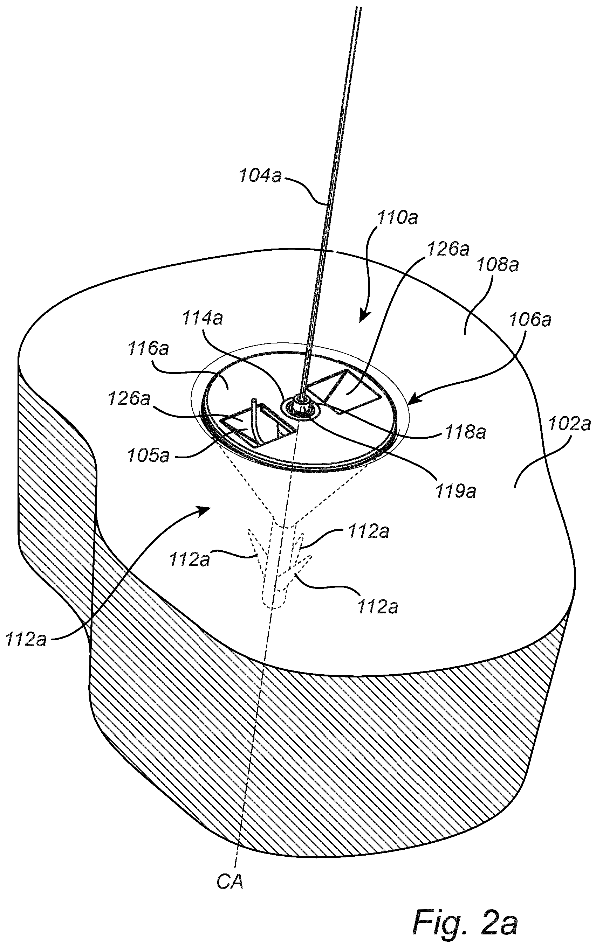

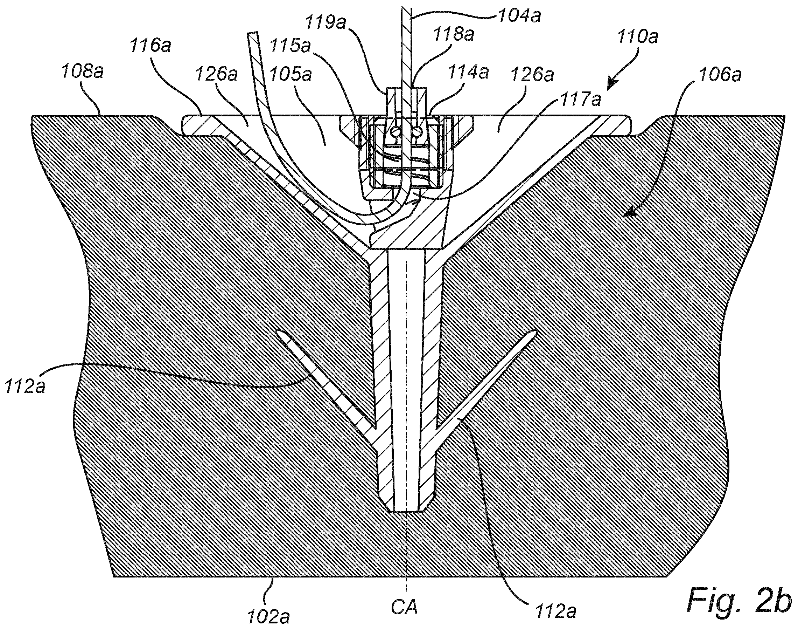

The depicted ceiling tiles 102a-f comprises different materials. The specific materials of some of the depicted ceiling tiles 102a-f will be discussed in more detail below in conjunction with Figs. 2-5. It is however to be understood that a number of different materials may be used to advantage in the ceiling tiles 102a-f. For instance, the ceiling tiles 102a-f may include a compressed fiber material. Suitable examples of compressed fiber material are mineral fiber material, such as glass wool, mineral wool and stone wool. Other examples of suitable compressed fiber material are wood fiber, textile fiber, polymer fiber and metal fiber. Other suitable example of materials for the ceiling tiles 102a-f are gypsum, concrete, wood, metal, plastics, cementitious materials, geo-polymeric materials, or combinations thereof. However other materials are also conceivable without departing from the scope of the inventive concept. Ceiling tiles comprising the exemplified fiber materials are known to exhibit acoustic properties such as sound absorbing properties.

As can be seen in Fig. 1, the ceiling tiles 102a-f are of different sizes and different shapes. Ceiling tiles 102a-d are all of a square shape and are of the same size. Ceiling tile 102e on the other hand is larger compared to ceiling tiles 102a-d. Also, ceiling tile 102e is in the form of a square. Ceiling tile 102f on the other hand is exhibiting a circular shape. As is evident, the size of and shape of the ceiling tiles 102a-f may be altered into any size and shape without departing from the scope of the present inventive concept. Also, the arrangement in terms of how the respective ceiling tiles 102a-f are suspended with respect to each other and the room in which they are present may be altered to suit the needs presently at hand. For instance, the ceiling tiles 102a-f may be arranged at different heights and/or may be inclined relative each other.

In Fig. 1 the ceiling tiles 102a-f are illustrated as being free hanging, meaning that the respective ceiling tiles 102a-f are not in contact with each other. It is however possible to arrange the ceiling tiles 102a-f such that the respective ceiling tiles 102a-f are in contact with neighboring ceiling tiles or some of the neighboring ceiling tiles.

Further, the ceiling tiles 102a-f may be provided with a layer on the side facing the interior of the room in which the ceiling tiles 102a-f are suspended. The layer may in turn be provided with decorative elements such a paint, a print, a sticker or similar. In other words, the appearance of the ceiling tiles 102a-f may be altered to suit the needs of a particular installation.

It will now be described in greater detail, with reference to Fig 2a and 2b, how suspension element 104a is used to suspend ceiling tile 102a by being connected to the ceiling tile 102a by means of anchor element 106a. Also, the design of the anchor element 106a will be described in greater detail. Although the below description will be made with reference to ceiling tile 102a, suspension element 104a and anchor element 106a, the below description is equally valid for any of the ceiling tiles 102a-f, any of the suspension elements 104a-f and any of the anchor elements 106a-f.

In Figs. 2a and 2b it is depicted how anchor element 106a is pressed into ceiling tile 102a, at the second major surface 108a thereof. The first major surface 107a is facing the interior of the room in which the ceiling tile 102a is suspended. The anchor element 106a is pressed into the ceiling tile 102a such that the anchor element 106a becomes completely recessed in the ceiling tile 102a. As is depicted, the second major surface 108a is deflected at the location of the anchor element 106a, such that the anchor element 106a becomes recessed in the ceiling tile 102a.

The depicted ceiling tile 102a comprises compressed fiber material. The depicted ceiling tile 102a is thus flexible to some extent and may consequently be penetrated by anchor element 106a while the anchor element is pressed into the ceiling tile 102a. The anchor element 106a may be pressed directly into the material of the ceiling tile 102a.

Alternatively, the ceiling tile 102a may be provided with an opening into which the anchor element 106a is pressed. If an opening is provided in the ceiling tile 102a, the opening may in practice have any shape assisting in inserting of the anchor element 106a. Such opening may be complementary to the anchor element 106a. Such opening may be partially complementary to the anchor element 106a. Such opening may be a straight drilled hole having a diameter smaller than a diameter of the anchor element 106a. Such opening may be drilled or milled into the ceiling tile 102a.

The depicted anchor element 106a of Figs. 2a and 2b comprises a body 110a.

As can be seen particularly in Fig. 2b, the body 110a comprises a lower portion and an upper portion. The lower portion of the depicted body 110a generally resembles a narrow slightly tapering pipe, whereas the upper portion generally resembles a wide funnel.

Hence, a portion of the body 110a has a tapered cross section as seen in a plane coinciding with a longitudinal axis of the body. The depicted body 110a tapers towards a bottom thereof.

Hence, the body 110a has a cross section facilitating pressing of the anchor element 106a into the tile 102a.

The body 110a is at the lower portion provided with provided with laterally extending external protrusions 112a. The depicted laterally extending external protrusions 112a of Figs. 2a and 2b are provided in form of barbs 112a. The barbs 112a are extending in an inclined manner upwards in Fig. 2b such that the barbs 112a may flex while the anchor element 106a is pressed into the tile 102a. Alternatively, the barbs 112a may be rigid. The barbs 112a are extending in an inclined manner upwards in Fig. 2b such that the barbs 112a may not or may only to a limited extent engage the tile 102a while the anchor element 106a is pressed into the tile 102a. On the other hand, if the anchor element 106a is pulled in a direction out of the tile 102a, i.e. upwards in Fig. 2b, the barbs 112a will significantly engage the tile 102a such that the anchor element 106a is prevented or counteracted from being pulled out of the tile 102a.

The barbs 112a may have different sizes and shapes to advantage. The number of the barbs 112a may be altered to advantage. The locations of the barbs 112a may be altered to advantage. A single barb 112a may be used to advantage.

Other types of laterally extending external protrusions 112a may be used to advantage. For example, an inclined flange, a pin or a biased projection may fulfil a similar purpose.

Suitable materials for the body 110a of the anchor element 106a include polymers, fiber reinforced polymers and metals to give a few non-limiting examples. However other materials are also conceivable without departing from the scope of the inventive concept. Anchor elements 106a comprising the exemplified materials are known to exhibit desirable material properties. The uppermost portion of the depicted anchor element 106a has a diameter of 37 mm. However, diameters in the range of 10-100 mm are generally feasible depending e.g. on the thickness and weight of the ceiling tile 102a to be suspended.

The depicted anchor element 106a of Figs. 2a and 2b comprises a wire lock 114a arranged in the anchor element 106a. The body 110a of the anchor element 106a supports the wire lock 114a. The wire lock 114a has an access port 118a. The anchor element 106a is arranged in the tile 102a such that the access port 118a is accessible from the second major surface 108a of the tile 102a.

The depicted wire lock 114a is of a one-way type meaning that suspension element 104a may be inserted and fed through the access port 118a without having to release the wire lock 114a. However, the suspension element 104a is prevented from being pulled back and out of the wire lock 114a without releasing the wire lock 114a.

The depicted wire lock 114a comprises a biased release member 119a. The release member 119a of the depicted wire lock 114a is protruding beyond the second major surface 108a of the tile 102a. The release member 119a is provided with the access port 118a. The release member 119a may be pushed back in order to release the suspension element 104a or suspension wire 104a. The release member 119a may be pushed back such that it becomes flush with a top surface 116a of the anchor element 106a. Hence, the release member 119a may be pushed back such that it becomes flush with the second major surface 108a of the tile 102a. Further, the release member 119a may be pushed back below the second major surface 108a of the tile 102a. This implies that absorber tile elements 102a may be stacked on top of each other with a reduced risk that the anchor elements 106a of the tile elements 102a damages neighboring tile elements 102a. Hence, the anchor element 106a is suitable for being pre-mounted to tile elements 102a.

The depicted wire lock 114a is threaded into the anchor element 106a. For that reason, the wire lock 114a is provided with an external thread and the body 110a of the anchor element 106a is provided with a cavity having an internal corresponding thread.

Different types of wire locks 114a may be used. Wire locks 114a locking the wire in both directions may be used to advantage. For instance, wire locks 114a utilizing screws to lock the wire 104a may be used.

As is seen in Figs. 2a and 2b, in particular in Fig. 2b, the wire lock 114a defines an internal wire lock channel 115a terminating in the access port 118a at a first end and in an outlet port 117a at a second end. The body 110a of the anchor element 106a defines an internal body channel 105a. In the depicted wire lock 114a the body channel 105a is adjoining the outlet port 117a. The body channel 105a is configured to guide a suspension wire 104a through the anchor element 106a. Hence, the body channel 105a is configured to guide a suspension wire 104a which has been passed through the wire lock 114a and introduced into the body channel 105a through the anchor element 106a. This means that a suspension wire 104a may be passed into the access port 118a, through the internal wire lock channel 115a, into and through the body channel 105a and finally out of the anchor element 106a, as can be seen in Fig. 2b.

As is seen in Figs. 2a and 2b, in particular in Fig. 2b, the body channel 105a of the depicted anchor element 106a is configured to guide the suspension wire 104a through the anchor element 106a such that the suspension wire 104a is deflected in a direction towards the top side 116a of the body 110a. Hence, the body channel 105a will deflect and bend a suspension wire 104a being fed therethrough such that the suspension wire 104a exits the anchor element channel 105a in a direction out of the top side or top surface 116a of the body 110a. The body channel 105a will typically deflect the suspension wire 104a with a bending radius in the range of 5-20 mm. A bending radius range of 5-20 mm allows for that a suspension wire 104a having a desired thickness may be used in the sense that the suspension wire 104a is bent and deflected easily when being fed and guided through the anchor element channel 105a. However, any bending radius in the range of 3-40 mm may be used to advantage.

The depicted suspension wire 104a of Figs. 2a and 2b typically has a diameter in the range of 0,5-3 mm. Preferably a diameter of 0,7-1,2 mm is chosen since a diameter within this range allows for a desired strength while still providing a wire flexible enough to easily be fed and guided through the body channel 105a. A diameter in the range of 0,5-3 mm may be used to advantage for any of the suspension elements 104a-f, 104x of Fig. 1.

As is seen in Figs. 2a and 2b the body 110a of the depicted anchor element 106a is provided with mounting tool recesses 126a. More specifically, the body 110a is provided with two mounting tool recesses 126a. Any number of mounting tool recesses 126a may be used to advantage. By providing at least one mounting tool recess 126a accessible by a mounting tool from a top side 116a of the body 110a, mounting of the anchor element 106a to the absorber tile element 102a may be significantly simplified since a tool may be used to press the anchor element 106a into the absorber tile element 102a. A tool having two protrusions may conveniently be inserted into the two mounting tool recesses 126a where the tool may engage the body 110a of the anchor element 106a, thus enabling a secure pressing of the anchor element 106a into the tile 102a with a reduced risk of slipping with the mounting tool. Hence, a risk of damaging the tile 102a while pressing in the anchor element 106a into the tile 102a may be significantly reduced.

The depicted anchor element 106a has a length, i.e. an extension along the central axis CA of the anchor element 106a, of 32.5 mm. Typical feasible lengths are between 10-150 mm, depending e.g. on the thickness of the tiles to be suspended.

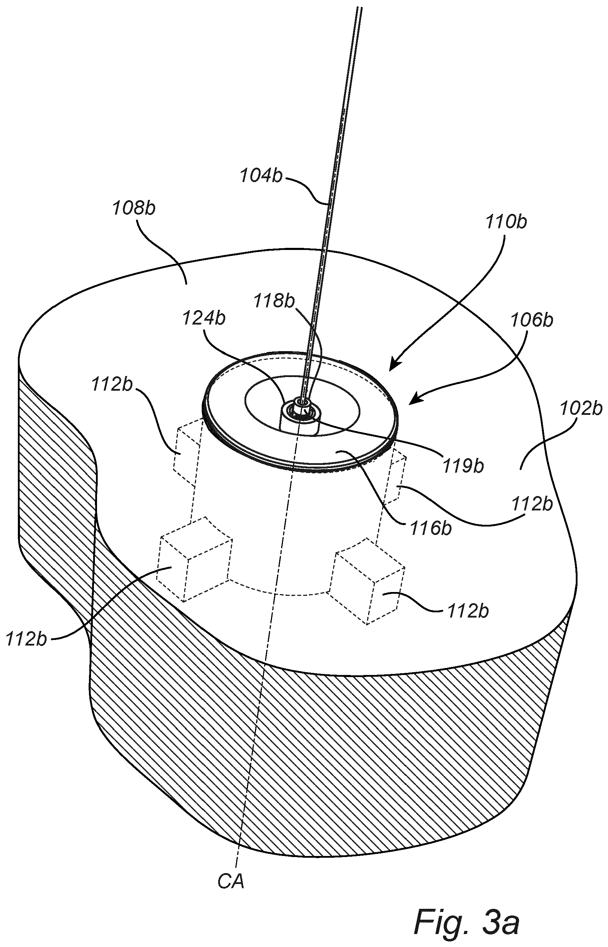

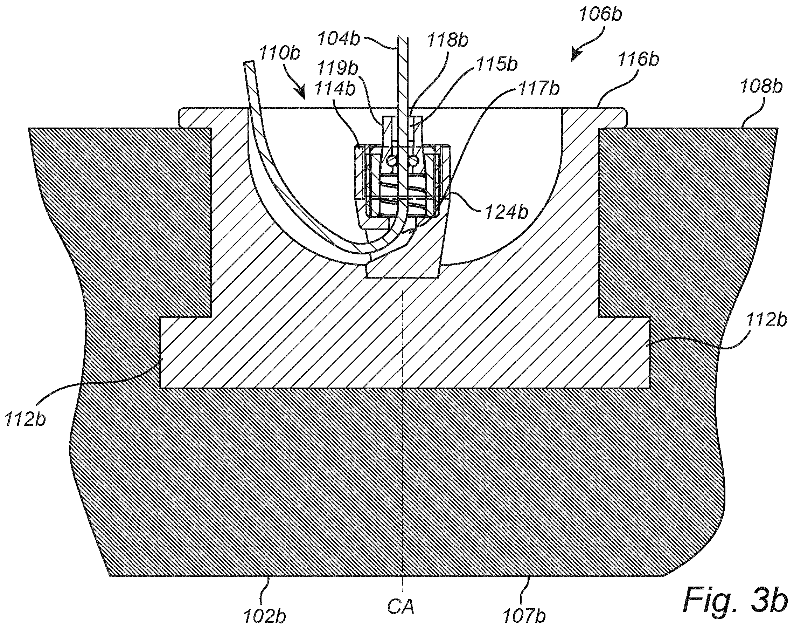

It will now be described in greater detail, with reference to Fig 3a and 3b, how suspension element 104b is used to suspend ceiling tile 102b by being connected to the ceiling tile 102b by means of anchor element 106b. The design of the anchor element 106b which is different from the anchor element 106a of Figs. 2a and 2b will be described in greater detail. Although the below description will be made with reference to ceiling tile 102b, suspension element 104b and anchor element 106b, the below description is equally valid for any of the ceiling tiles 102a-f, any of the suspension elements 104a-f and any of the anchor elements 106a-f.

In Figs. 3a and 3b it is depicted how anchor element 106b is molded into ceiling tile 102b, at the second major surface 108b thereof. The anchor element 106b is molded into the ceiling tile 102b such that the anchor element 106b becomes recessed in the ceiling tile 102b. As is depicted, the second major surface 108b is flat, i.e. not deflected or recessed, at the location of the anchor element 106b. Hence, a top portion of the anchor element 106b protrudes slightly above the second major surface 108b.

The depicted ceiling tile 102b comprises a gypsum material. The depicted ceiling tile 102b is thus formed by being molded from a gypsum material. As is known in the art, gypsum is commonly molded to form gypsum boards. Such gypsum boards may be molded to size or may be cut to a desired size. The depicted anchor element 106b is molded into the tile 102b when the tile is formed. Hence, the material of the tile 102b surrounds the perimeter of the anchor element 106b as can be seen in Figs. 3a and 3b.

Alternatively, the ceiling tile 102b may be provided with an opening into which the anchor element 106b is molded. In that case, anchor element 106b may be molded in place in the opening by means of a molding compound or molding paste. If an opening is provided in the ceiling tile 102b, the opening may in practice have any shape and size capable of receiving the anchor element 106b. Such opening may be a straight drilled hole having a diameter larger than a diameter of the anchor element 106b. Such opening may be drilled, milled, molded or similar into the ceiling tile 102b. Further, if an opening is provided in the ceiling tile 102b, the material of the ceiling tile 102b may vary greatly since the anchor element 106b may not be molded into the material of the tile 102b as such. Hence, a molding compound or molding paste may fill or partially fill voids between the ceiling tile 102b and the anchor element 106b. Suitable examples of tile materials are discussed above in conjunction with Figs. 2a and 2b.

The depicted anchor element 106b of Figs. 3a and 3b comprises a body 110b like the anchor element 106a of Figs. 2a and 2b.

The body 110b is at a lower portion provided with provided with laterally extending external protrusions 112b. More specifically, the lower portion of the body 110b is provided with four laterally extending external protrusions 112b. Each laterally extending external protrusion 112b has a square cross section as can be seen in phantom in Fig. 3a. Each laterally extending external protrusion 112b extends in a radial direction of the body 110b. Hence, the laterally extending external protrusions 112b will thus prevent or counteract retraction of the anchor element 106b from the tile 102b. Similarly, the laterally extending external protrusions 112b will prevent or counteract that the anchor element 106b is pressed further into the tile 102b. In other words, the anchor element 106b has cross section counteracting retraction of the anchor element 106b out of the tile and counteracting pressing of the anchor element 106b further into the tile 102b.

The body 110b of the depicted anchor element 106b is formed by being molded from plastic. Alternatively, the body 110b of the depicted anchor element 106b may be formed by being molded from metal. The body 110b of the depicted anchor element 106b has a diameter of 37 mm at its widest point. However, diameters in the range of 10-100 mm are generally feasible depending e.g. on the thickness and weight of the tile to be suspended, as discussed above.

The length of the anchor element 106b is smaller as compared to the length of the anchor element 106a of Figs. 2a and 2b, as described above. However, the length of the anchor element 106b may be tailored to suit the needs at hand.

In the depicted anchor element 106b of Figs. 3a and 3b, the body 110b comprises a wire lock holding member 124b supporting the wire lock 114b. The depicted wire lock holding member 124b is a socket which is attached to the body 110b. Hence, the wire lock holding member 124b is formed separately from the body 110b of the anchor element 106b, and subsequently fastened to the body 110b. The depicted wire lock holding member 124b includes a portion of the body channel 105b. The wire lock holding member 124b may include the body channel 105b or may not include the body channel 105b. The wire lock 114b is in turn press fitted into the wire lock holding member 124b. Different designs, sizes and fastening techniques of the wire lock holding member 124b may be used to advantage. Other fastening techniques include soldering, welding or gluing to give a few non-limiting examples.

In the depicted anchor element 106b of Figs. 3a and 3b, a biased release member 119b is located below the top surface 116b of the body 110b. Hence, the complete wire lock 114b is located below the top surface 116b of the body 110b such that the wire lock 114b is housed within the anchor element 106b.

The depicted wire lock 114b of Figs. 3a and 3b defines an internal wire lock channel 115b like the wire lock 114a of Figs. 2a and 2b. The internal wire lock channel 115b will consequently not be described in greater detail to avoid undue repetition.

Similarly, the anchor element 106b of Figs. 3a and 3b defines a body channel 105b like the anchor element 106a of Figs. 2a and 2b. The body channel 105b will consequently not be described in greater detail to avoid undue repetition.

As is understood, the anchor element 106b may be molded into tiles including different moldable materials such as plastics, glass, cement or similar to give a few non-limiting examples.

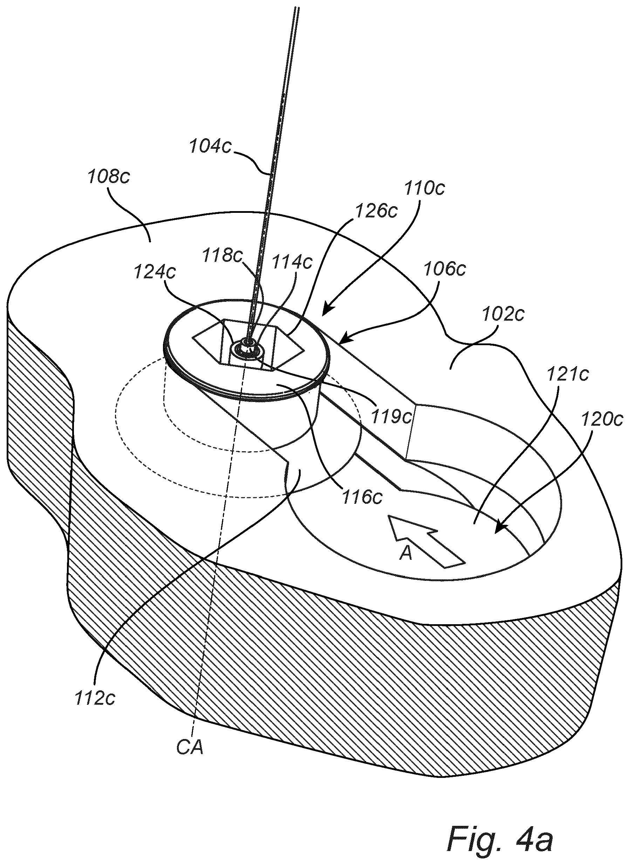

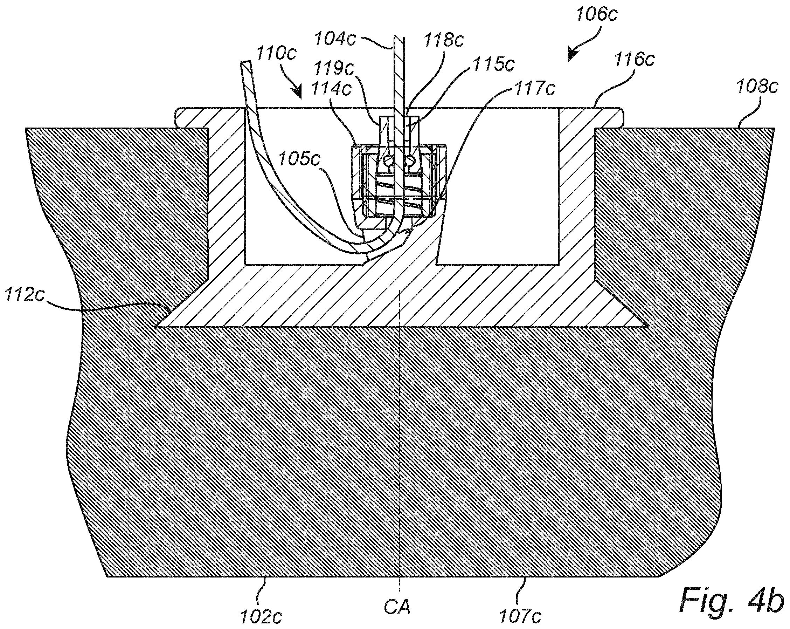

It will now be described in greater detail, with reference to Fig 4a and 4b, how suspension element 104c is used to suspend ceiling tile 102c by being connected to the ceiling tile 102c by means of anchor element 106c. The design of the anchor element 106c which is different from the anchor element 106a of Figs. 2a and 2b and from the anchor element 106b of Figs. 3a and 3b will be described in greater detail. Although the below description will be made with reference to ceiling tile 102c, suspension element 104c and anchor element 106c, the below description is equally valid for any of the ceiling tiles 102a-f, any of the suspension elements 104a-f and any of the anchor elements 106a-f.

In Figs. 4a and 4b it is depicted how anchor element 106b is slotted into ceiling tile 102c, at the second major surface 108c thereof. The anchor element 106c is slotted into the ceiling tile 102c such that the anchor element 106c becomes recessed in the ceiling tile 102c. As is depicted, the second major surface 108c is flat, i.e. not deflected, at the location of the anchor element 106c. Hence, a top portion of the anchor element 106c protrudes slightly above the second major surface 108c.

The depicted ceiling tile 102c comprises a wooden material. The depicted ceiling tile 102c is thus formed form a wood comprising board. Examples of suitable wood comprising boards include laminated veneer lumber boards, solid wood boards, chipboards or similar. The tile 102c may be cut to size or may be formed in a desired size.

The depicted anchor element 106c is slotted into the tile 102b. More specifically the depicted anchor element 106c is slotted into a dedicated slot 120c formed in the tile 102c. The depicted anchor element 106c is slotted into the tile 102c such that the material of the tile 102c surrounds a substantial portion of the perimeter of the anchor element 106c as can be seen in Figs. 4a and 4b. Generally speaking, the perimeter of the anchor element 106c is surrounded by the material of the tile 102c on three radial sides thereof.

The slot 120c has an opening 121c through which the anchor element 106c may be inserted. Hence, by inserting the anchor element 106c into the opening 121c of the slot 120c, the anchor element 106c is received by the tile 102c. In order to fasten the anchor element 106c to the tile 102c, the anchor element 106c is moved sideways into the slot 120c as indicated by arrow A in Fig. 4a. By moving the anchor element 106c sideways into the slot 120c, the material of the tile 102c surrounds the perimeter of the anchor element 106c except for in a direction towards the opening 121c, i.e. in a direction opposite to arrow A, as can be seen in Figs. 4a and 4b. Portions of the slot 120c apart from the opening 121c are formed such that the slot is narrower at a top portion thereof as compared to a lower portion thereof. In other words, portions of the slot 120c apart from the opening 121c are formed with overhangs. The overhangs may thus prevent removal of an anchor element being wider at a lower portion thereof as compared to an upper portion thereof, as will be discussed in greater detail below.

The slot 120c may advantageously be milled into the tile 102c using a dedicated tool.

The slot 120c may have any shape suitable for fastening an anchor element 106c in the manner described above.

The anchor element 106c may be locked in the slot 120c by being glued. The anchor element 106c may be locked in the slot 120c by exhibiting a press fit. The anchor element 106c may be locked in the slot 120c by inserting a stop member or plug into the opening 121c such that the anchor element is prevented or counteracted from being moved towards the opening 121c, i.e. in a direction opposite to the arrow A.

The depicted anchor element 106c of Figs. 4a and 4b comprises a body 110b like the anchor element 106a of Figs. 2a and 2b and the anchor element 106b of Figs. 3a and 3b.

The body 110c is at a lower portion provided with provided with a rotationally symmetric laterally extending external protrusion 112c. More specifically, the lower portion of the body 110c is provided with a laterally extending external protrusion 112c in form of a flange which tapers towards the top surface 116c of the anchor element 106c. In other words, a portion of the body 110c has a tapered cross section as seen in a plane coinciding with a longitudinal axis of the body.

The laterally extending external protrusion 112c extends in a radial direction of the body 110c. The laterally extending external protrusion 112c will thus engage a lower portion of the slot 120c such that the anchor element 106c is prevented or counteracted from being retracted from the tile 102c. Similarly, the laterally extending external protrusions 112b will prevent or counteract that the anchor element 106b is pressed further into the tile 102c. In other words, the anchor element 106c has cross section counteracting retraction of the anchor element 106c out of the tile and counteracting pressing of the anchor element 106c further into the tile 102c.

The exterior of the anchor element 106c is consequently partially complementary to the interior of the slot 120c.

The body 110c of the depicted anchor element 106c is formed by being molded from a metal material. Alternatively, the body 110c of the depicted anchor element 106c may be formed by being molded from a plastic material. The body 110b of the depicted anchor element 106b has a diameter of 42 mm at its widest point. However, diameters in the range of 10-100 mm are generally feasible depending e.g. on the thickness and weight of the tile to be suspended, as discussed above.

The length of the anchor element 106c is smaller as compared to the length of the anchor element 106a of Figs. 2a and 2b, as described above. However, the length of the anchor element 106c may be tailored to suit the needs at hand.

In the depicted anchor element 106c of Figs. 4a and 4b, the body 110c is directly supporting the wire lock 114c. The wire lock 114c may be press fitted into the body 110c. Other fastening techniques of the wire lock 114c may be used to advantage. Other fastening techniques include soldering, welding or gluing to give a few non-limiting examples.

In the depicted anchor element 106c of Figs. 4a and 4b, a biased release member 119c is located below the top surface 116c of the body 110c. Hence, the complete wire lock 114c is located below the top surface 116c of the body 110c such that the wire lock 114c is housed within the anchor element 106c.

The depicted wire lock 114c of Figs. 4a and 4b defines an internal wire lock channel 115c like the wire lock 114a of Figs. 2a and 2b. The internal wire lock channel 115c will consequently not be described in greater detail to avoid undue repetition.

Similarly, the anchor element 106c of Figs. 4a and 4b defines a body channel 105c like the anchor element 106a of Figs. 2a and 2b. The body channel 105c will consequently not be described in greater detail to avoid undue repetition.

As is seen in Figs. 4a and 4b the body 110c of the depicted anchor element 106c is provided with a mounting tool recess 126c. More specifically, the body 110c is provided with a mounting tool recess 126c in form of a hexagonal recess. Hence, a hex-key may be used to slot the anchor element 106c into the slot 120c of the tile 102c.

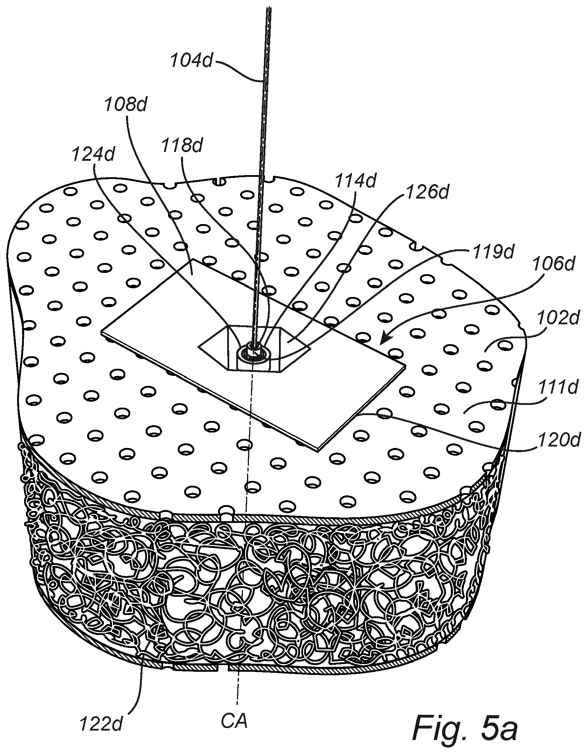

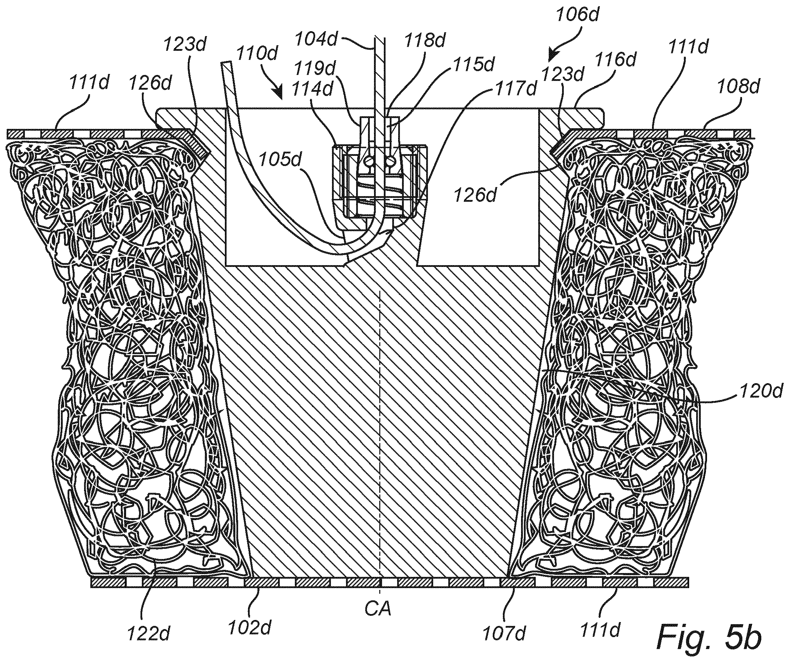

It will now be described in greater detail, with reference to Fig 5a and 5b, how suspension element 104d is used to suspend ceiling tile 102d by being connected to the ceiling tile 102d by means of anchor element 106d. The design of the anchor element 106d which is different from the anchor element 106 of Figs. 2a and 2b, from the anchor element 106b of Figs. 3a and 3b and from anchor element 106c of Figs. 4a and 4b will be described in greater detail. Although the below description will be made with reference to ceiling tile 102d, suspension element 104d and anchor element 106d, the below description is equally valid for any of the ceiling tiles 102a-f, any of the suspension elements 104a-f and any of the anchor elements 106a-f.

In Figs. 5a and 4b it is depicted how anchor element 106d is pressed into ceiling tile 102d, at the second major surface 108d thereof. The anchor element 106d is pressed into the ceiling tile 102d such that the anchor element 106d becomes recessed in the ceiling tile 102d. As is depicted, the second major surface 108d is flat, i.e. not deflected, at the location of the anchor element 106d. Hence, a top portion of the anchor element 106d protrudes slightly above the second major surface 108d. However, the top portion of the anchor element 106d may not protrude above the second major surface 108d.

The depicted ceiling tile 102d comprises an external shell 111d of perforated material. Hence, the external shell 111d defines an internal space 122d. The internal space 122d of the depicted ceiling tile 102d is filled with a fiber material. The depicted ceiling tile 102d is thus formed form a shell 111d of perforated material which is filled with a fiber material. By this arrangement, a strong tile 102d with sound absorbing properties may be formed.

The shell 111d may as an alternative to advantage be formed of a solid non-perforated material. Examples of suitable shell materials include metal, metal sheets, gypsum board, wood comprising board. However, other materials may be used to advantage.

Alternatively, the internal space 122d may be free of any material. The internal space 122d may be partially filled. The internal space 122d may be filled with a plurality of materials. The internal space 122d may be filled with sound absorbing materials. The internal space 122d may be filled with fire retardant materials.

The depicted anchor element 106d is pressed into the tile 102d. More specifically the depicted anchor element 106c is pressed into a dedicated opening 120d formed in the tile 102d. The depicted anchor element 106d is pressed into the tile 102d such that the fiber material of the internal space 122d of the tile 102d surrounds a substantial portion of the perimeter of the anchor element 106d as can be seen in Figs. 5a and 5b. Generally speaking, the perimeter of the anchor element 106d is surrounded by the material of the external shell 111d and by the fiber material of the internal space 122d of the tile 102d.

The opening 120d through which the anchor element 106d is inserted is provided with flanges 123d. The flanges 123d are formed by portions of the external shell 111d which are bent into the opening 120d so as to extend downwards in an inclined fashion.

Alternatively, the flanges 123d may be formed of a separate part which is joined to the external shell 111d. The flanges 123d may be provided on a frame which is fixed to the external shell 111d. Such frame may for instance be pressed into the external shell 111d, glued to the external shell 111d, welded to the external shell 111d or fixed by any other suitable technique.

The depicted flanges 123d are formed such that they bend and flex while the anchor element 106d is inserted into the opening 120d of the tile 102d. Once in place, the flanges 123d snap back thereby locking the anchor element 106d in relation to the tile 102d by engaging the recess 125d arranged at the upper portion of the anchor element 106d. The exterior of the depicted anchor element 106d is consequently partially complementary to the interior of the opening 120c.

Hence, by inserting the anchor element 106d into the opening 120d and pressing the anchor element 106d into place, the anchor element 106d is received by and locked in relation to the tile 102d.

The depicted anchor element 106c of Figs. 5a and 5b comprises a body 110d like the anchor element 106a of Figs. 2a and 2b, the anchor element 106b of Figs. 3a and 3b and the anchor element 106c of Figs. 4a and 4b. The body 110d of the depicted anchor element has a rectangular cross section in as seen along a central axis CA thereof. This is best shown in Fig. 5a. Further the body 110d tapers towards a bottom thereof. In other words, the body 110d has an overall tapered cross section as seen in a plane coinciding with a longitudinal axis of the body 110d. The depicted body 110d tapers towards a bottom thereof.

The body 110d of the depicted anchor element 106d is formed by being molded from a metal material. Alternatively, the body 110d of the depicted anchor element 106d may be formed by being molded from a plastic material. The body 110d of the depicted anchor element 106d has an extension in a major direction of 100 mm at its top and an extension of 30 mm in a minor direction at its top. In other words, the top surface of the anchor element 106d has the shape of a rectangle measuring 100 x 30 mm. However, other sizes may be used to advantage depending e.g. on the thickness and weight of the tile to be suspended, as discussed above.

The length of the anchor element 106c is larger as compared to the length of the anchor element 106a of Figs. 2a and 2b, as described above. More specifically, the anchor element 106d has a length which results in that a bottom portion of the anchor element 106d abuts an inside of the first major surface 107d formed by the external shell 111. Hence the anchor element 106d is prevented or counteracted from being further pressed into the tile 102d by the lower portion abutting the inside of the first major surface 107d formed by the external shell 111. However, the length of the anchor element 106d may be tailored to suit the needs at hand.

In the depicted anchor element 106d of Figs. 5a and 5b, the body 110d is directly supporting the wire lock 114d like in Figs 4a and 4b. The wire lock 114d may be press fitted into the body 110d. Other fastening techniques of the wire lock 114d may be used to advantage. Other fastening techniques include soldering, welding or gluing to give a few non-limiting examples.

In the depicted anchor element 106d of Figs. 5a and 5b, a biased release member 119d is located below the top surface 116d of the body 110d. Hence, the complete wire lock 114d is located below the top surface 116d of the body 110d such that the wire lock 114d is housed within the anchor element 106d.

The depicted wire lock 114d of Figs. 5a and 5b defines an internal wire lock channel 115d like the wire lock 114a of Figs. 2a and 2b. The internal wire lock channel 115d will consequently not be described in greater detail to avoid undue repetition.

Similarly, the anchor element 106d of Figs. 5a and 5b defines a body channel 105d like the anchor element 106a of Figs. 2a and 2b. The body channel 105d will consequently not be described in greater detail to avoid undue repetition.

As is seen in Figs. 5a and 5b the body 110d of the depicted anchor element 106d is provided with a mounting tool recess 126d like the body 110c of the anchor element 106c of Figs. 4a and 4b.

Now referring to Fig. 6, here it is conceptually depicted in greater detail how ceiling tiles 102e and 102f are suspended using the common suspension element 104x, and respective anchor elements 106e and 106f.

Anchor element 106f used for suspending ceiling tile 102f is of the same type as anchor element 102a described above in relation to Figs. 2a and 2b. Hence, anchor element 102f will not be described in greater detail to avoid undue repetition.

Anchor element 106e used for suspending ceiling tile 102e is similar to anchor element 102a described above in relation to Figs. 2a and 2b. The body channel 105e of anchor element 106e is formed differently as compared to the body channels 105a and 105f. However, the wire lock channels 115e and 115f are both formed as the wire lock channel 115a of Figs. 2a and 2b.

More specifically, the body channel 105e of anchor element 106e is a straight body channel 105e. The body channel 105e extends along a central axis CA of the anchor element 106e.

Body channel 105e is configured to guide the suspension wire 104x through the anchor element 106e such that the suspension wire is guided in a direction towards a bottom side 113e of the body 110e. Hence, when suspension wire 104x is guided through the anchor element 106e the suspension wire 104x will exit the anchor element 106e at the bottom thereof. The suspension wire 104x may as is depicted in in Fig. 6 penetrate the tile 102e and exit the tile 102e at its first major surface 107e. i.e. the surface facing the interior of the room in which the ceiling tile 102e is suspended. From there the suspension wire 104x may continue to another anchor element, like anchor element 106f in Fig. 6.

By this arrangement, ceiling tile 102e is suspended above ceiling tile 102f using the common suspension element 104x, as described above. It is to be understood that three or more ceiling tiles may be suspended after each other in a vertical direction using a common suspension element 104x as described above.

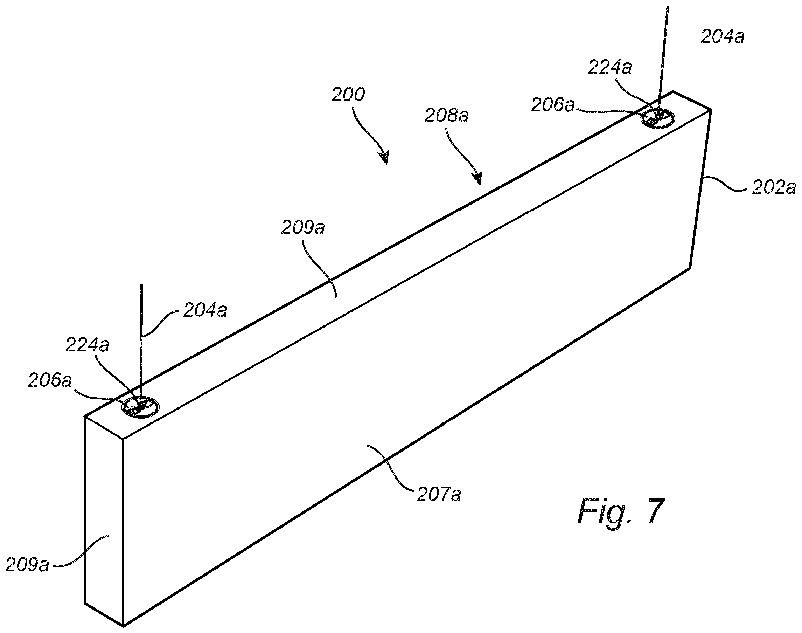

Now referring to Fig. 7, here is conceptually depicted a tile system 200 in form of a baffle system 200. For reasons of simplicity there is a single planar tile in form a baffle 202a illustrated in Fig. 6. It is however to be understood that any number of baffles 202a may be used according to the present inventive concept. The baffle 202a has a first major surface 207a and an opposing second major surface 208a. Further, the baffle 202a has four side edge surfaces 209a extending between the respective first 207a and second 208a major surfaces.

The depicted baffle 202a, comprises compressed fiber material. Suitable examples of compressed fiber material are mineral fiber material, such as glass wool, mineral wool and stone wool. Other examples of suitable compressed fiber material are wood fiber, textile fiber, polymer fiber and metal fiber. Baffles 202a comprising the exemplified materials are known to exhibit acoustic properties such as sound absorbing properties. However, other materials are also conceivable without departing from the scope of the inventive concept. For example, all materials discussed above are conceivable.

The baffle 202a is suspended by means of two suspension elements 204a in form of wires. Other relevant examples of suspension elements are a line, a cable, a cord, a thread, a rod, a string, a chain, a rope or a combination thereof. Each suspension element 204a is attached to the baffle 202a in corresponding attachment points. Each attachment point includes an anchor element 206a. The depicted anchor elements 206a are of the type described above in conjunction with Figs. 2a and 2b. Accordingly, the anchor elements 206a will not be described in detail below to avoid undue repetition.

The anchor elements 206a are pressed into one of the side edge surfaces 209a of the baffle 202a. By pressing the anchor elements 206a into one of the side edge surfaces 209a the baffle 202a may be vertically suspended as illustrated in Fig. 7.

Any of the anchor elements 106a-f may be used to advantage with the baffle 202a.

As is understood, the respective types of anchor elements 106a-f described above may be interchanged with each other to suit specific installation needs. Hence, a tile system, such as a suspended ceiling or a panel system, may include a plurality of types of anchor elements 106a-f. Similarly, a tile system may include a single type of anchor elements 106a-f. The anchor elements 106a-f described may advantageously be used to fasten or suspend vertically arranged panels or tiles, such as sound absorbing baffles 202a, as described above. Also, a tile system 100, 200 may include different types of tiles, such as ceiling tiles 102a-f, decorative tiles, panels and baffles 202a. In other words, a single tile system 100, 200 may for instance include a number of ceiling tiles 102a-f and a number of baffles 202a to give an example.

It will be appreciated that the present inventive concept is not limited to the variants shown. Several modifications and variations are thus conceivable within the scope of the invention which thus is defined by the appended claims.

## Claims

1. A tile element (102a-f, 202a) comprising:
a tile (102a-f, 202a) having a first major surface (107a-f, 207a) an opposing second major surface (108a-f, 208a), and at least one side edge surface (109a-f, 209a) extending between the first major surface (107a-f, 207a) and the second major surface (108a-f, 208a), and
an anchor element (106a-f, 206a) associated with only one of the first major surface (107a-f, 207a) and the second major surface (108a-f, 208a) or only one of the at least one side edge surface (109a-f, 209a) of the tile element (102a-f, 202a), wherein
the anchor element (106a-f, 206a) comprises a body (110a-f) supporting a wire lock (114a-f),
wherein the anchor element (106a-f, 206a) is arranged in the tile (102a-f, 202a) such that the anchor element (106a-f, 206a) and the wire lock (114a-f) thereof becomes recessed in the tile (102a-f, 202a) and such that an access port (118a-f) of the wire lock (114a-f) becomes accessible from the associated first major surface (107a-f, 207a), second major surface (108a-f, 208a) or one of the at least one side edge surface (109a-f, 209a) of the tile (102a-f, 202a), and
wherein the anchor element (106a-f, 206a) being arranged in the tile (102a-f, 202a) by being molded, pressed or slotted into the tile (102a-f, 202a).

2. The tile element (102a-f, 202a) according to claim 1, wherein the wire lock (114a-f) defines an internal wire lock (115a-f) channel terminating in the access port (118a-f) at a first end and in an outlet port (117a-d) at a second end, and wherein the body (110a-f) defines an internal body channel (105a-f),
the body channel (105a-f) adjoining the outlet port (117a-d), and being configured to guide a suspension wire (104a-104f, 104x, 204a) through the body (110a-f), which suspension wire (104a-104f, 104x, 204a) has been passed through the wire lock (114a-f) and introduced into the body channel (105a-f).

3. The tile element (102a-f, 202a) according to claim 2, wherein the body channel (105a-f) is configured to guide the suspension wire (104a-104f, 104x, 204a) through the body (110a-f) such that the suspension wire (104a-104f, 104x, 204a) is deflected in a direction towards a top side (116a-f) of body (110a-f).

4. The tile element (102a-f, 202a) according to claim 3, wherein the body channel (105a-f) is configured to deflect the suspension wire (104a-104f, 104x, 204a) with a bending radius in the range of 3-40 mm.

5. The tile element (102a-f, 202a) according to claim 2, wherein the body channel (105a-f) is configured to guide the suspension wire (104a-104f, 104x, 204a) through the body (110a-f) such that the suspension wire (104a-104f, 104x, 204a) is guided in a direction towards a bottom side (113e) of the body (110a-f).

6. The tile element (102a-f, 202a) according to any one of the preceding claims, wherein the wire lock (114a-f), is housed within the body (110a-f).

7. The tile element (102a-f, 202a) according to any one of claims 1-5, wherein the wire lock (114a-f), comprises a biased release member (119a-f) protruding beyond a top surface (116a-f) of the body (110a-f) and being provided with the access port (118a-f).

8. The tile element (102a-f, 202a) according to any one of the preceding claims, wherein the body (110a-f) is provided with a laterally extending external protrusion (112a-c, 112e-f).

9. The tile element (102a-f, 202a) according to claim 8, wherein the laterally extending external protrusion (112a-c, 112e-f) comprises an element selected from the group consisting of a flange (112c), a barb (112a), a pin (112b) and a biased projection.

10. The tile element (102a-f, 202a) according to any one of the preceding claims, wherein a portion of the body (110a-f) has a tapered cross section as seen in a plane coinciding with a longitudinal axis of the body (110a-f).

11. The tile element (102a-f, 202a) according to any one of the preceding claims, wherein the body (110a-f) is pressed into the tile (102a-f, 202a) and has a cross section facilitating pressing of the anchor element (106a-f, 206a) into the tile (102a-f, 202a).

12. The tile element (102a-f, 202a) according to any one of claims 1-10, wherein the body (110a-f) is molded into the tile (102a-f, 202a) and has cross section counteracting retraction of the anchor element (106a-f, 206a) out of the tile (102a-f, 202a) and/or counteracting pressing of the anchor element (106a-f, 206a) further into the tile (102a-f, 202a).

13. The tile element (102a-f, 202a) according to any one of the preceding claims, wherein the tile (102a-f, 202a) comprises a material selected form the group consisting of mineral fiber, wood fiber, textile fiber, polymer fiber, metal fiber, gypsum, concrete, wood, metal, plastics, cementitious materials, geo-polymeric materials, or combinations thereof.

14. The tile element (102a-f, 202a) according to claim 1, wherein the body (110a-f) has an extension in the interval of 10-150 mm, preferably 15-100 mm, along a central axis (CA) thereof, and wherein the body (110a-f) has an extension in the interval of 10-100 mm, preferably 15-60 mm, in a direction transverse to the central axis (CA).

15. A tile system (100, 200) comprising:
a tile element (102a-f, 202a) according to any one of claims 1-14, and
a suspension wire (104a-104f, 104x, 204a) releasably coupled to the wire lock (114a-f) for suspension of the tile element (102a-f, 202a).

## Patentansprüche

1. Plattenelement (102a-f, 202a), umfassend:
eine Platte (102a-f, 202a) mit einer ersten Hauptfläche (107a-f, 207a), einer gegenüberliegenden zweiten Hauptfläche (108a-f, 208a) und mindestens einer Seitenrandfläche (109a-f, 209a), die sich zwischen der ersten Hauptfläche (107a-f, 207a) und der zweiten Hauptfläche (108a-f, 208a) erstreckt, und
ein Verankerungselement (106a-f, 206a), das mit nur einer von der ersten Hauptfläche (107a-f, 207a) und der zweiten Hauptfläche (108a-f, 208a) oder nur einer der mindestens einen Seitenrandfläche (109a-f, 209a) des Plattenelements (102a-f, 202a) verbunden ist, wobei
das Verankerungselement (106a-f, 206a) einen Körper (110a-f) umfasst, der eine Drahtverriegelung (114a-f) trägt,
wobei das Verankerungselement (106a-f, 206a) in der Platte (102a-f, 202a) derart angeordnet ist, dass das Verankerungselement (106a-f, 206a) und die Drahtverriegelung (114a-f) davon in der Platte (102a-f, 202a) versenkt werden, und derart, dass eine Zugangsöffnung (118a-f) der Drahtverriegelung (114a-f) von der zugeordneten ersten Hauptfläche (107a-f, 207a), zweiten Hauptfläche (108a-f, 208a) oder einer der mindestens einen Seitenrandfläche (109a-f, 209a) der Platte (102a-f, 202a) zugänglich wird, und
wobei das Verankerungselement (106a-f, 206a) in der Platte (102a-f, 202a) angeordnet ist, indem es in die Platte (102a-f, 202a) geformt, gepresst oder geschlitzt ist.

2. Plattenelement (102a-f, 202a) nach Anspruch 1, wobei die Drahtverriegelung (114a-f) einen Kanal einer inneren Drahtverriegelung (115a-f) definiert, der in der Zugangsöffnung (118a-f) an einem ersten Ende und in einer Auslassöffnung (117a-d) an einem zweiten Ende endet, und wobei der Körper (110a-f) einen inneren Körperkanal (105a-f) definiert, wobei der Körperkanal (105a-f) an die Auslassöffnung (117a-d) angrenzt und eingerichtet ist, um einen Abhängungsdraht (104a-104f, 104x, 204a) durch den Körper (110a-f) zu führen, wobei der Abhängungsdraht (104a-104f, 104x, 204a) durch die Drahtverriegelung (114a-f) geführt und in den Körperkanal (105a-f) eingeführt wurde.

3. Plattenelement (102a-f, 202a) nach Anspruch 2, wobei der Körperkanal (105a-f) eingerichtet ist, um den Abhängungsdraht (104a-104f, 104x, 204a) derart durch das Körper (110a-f) zu führen, dass der Abhängungsdraht (104a-104f, 104x, 204a) in einer Richtung zu einer oberen Seite (116a-f) des Körpers (110a-f) abgelenkt ist.

4. Plattenelement (102a-f, 202a) nach Anspruch 3, wobei der Körperkanal (105a-f) eingerichtet ist, um den Abhängungsdraht (104a-104f, 104x, 204a) mit einem Biegeradius in dem Bereich von 3-40 mm abzulenken.

5. Plattenelement (102a-f, 202a) nach Anspruch 2, wobei der Körperkanal (105a-f) eingerichtet ist, um den Abhängungsdraht (104a-104f, 104x, 204a) derart durch den Körper (110a-f) zu führen, dass der Abhängungsdraht (104a-104f, 104x, 204a) in einer Richtung zu einer unteren Seite (113e) des Körpers (110a-f) geführt ist.

6. Plattenelement (102a-f, 202a) nach einem der vorhergehenden Ansprüche, wobei die Drahtverriegelung (114a-f) innerhalb des Körpers (110a-f) untergebracht ist.

7. Plattenelement (102a-f, 202a) nach einem der Ansprüche 1-5, wobei die Drahtverriegelung (114a-f) ein vorgespanntes Freigabeelement (119a-f) umfasst, das über eine obere Fläche (116a-f) des Körpers (110a-f) vorsteht und mit der Zugangsöffnung (118a-f) versehen ist.

8. Plattenelement (102a-f, 202a) nach einem der vorhergehenden Ansprüche, wobei der Körper (110a-f) mit einem sich seitlich erstreckenden äußeren Vorsprung (112a-c, 112e-f) versehen ist.

9. Plattenelement (102a-f, 202a) nach Anspruch 8, wobei der sich seitlich erstreckende äußere Vorsprung (112a-c, 112e-f) ein Element umfasst, das aus der Gruppe ausgewählt ist, die aus einem Flansch (112c), einem Widerhaken (112a), einem Stift (112b) und einem vorgespannten Vorsprung besteht.

10. Plattenelement (102a-f, 202a) nach einem der vorhergehenden Ansprüche, wobei ein Abschnitt des Körpers (110a-f) einen sich verjüngenden Querschnitt aufweist, wie in einer Ebene zu sehen ist, die mit einer Längsachse des Körpers (110a-f) übereinstimmt.

11. Plattenelement (102a-f, 202a) nach einem der vorhergehenden Ansprüche, wobei der Körper (110a-f) in die Platte (102a-f, 202a) gepresst ist und einen Querschnitt aufweist, der ein Pressen des Verankerungselements (106a-f, 206a) in die Platte (102a-f, 202a) erleichtert.

12. Plattenelement (102a-f, 202a) nach einem der Ansprüche 1-10, wobei der Körper (110a-f) in die Platte (102a-f, 202a) geformt ist und einen Querschnitt aufweist, der einem Zurückziehen des Verankerungselements (106a-f, 206a) aus der Platte (102a-f, 202a) und/oder einem Pressen des Verankerungselements (106a-f, 206a) weiter in die Platte (102a-f, 202a) entgegenwirkt.

13. Plattenelement (102a-f, 202a) nach einem der vorhergehenden Ansprüche, wobei die Platte (102a-f, 202a) ein Material umfasst, das aus der Gruppe ausgewählt ist, die aus Mineralfaser, Holzfaser, Textilfaser, Polymerfaser, Metallfaser, Gips, Beton, Holz, Metall, Kunststoff, zementartigen Materialien, geopolymeren Materialien oder Kombinationen davon besteht.

14. Plattenelement (102a-f, 202a) nach Anspruch 1, wobei der Körper (110a-f) eine Erstreckung in dem Bereich von 10-150 mm, vorzugsweise 15-100 mm, entlang einer Mittelachse (CA) davon aufweist und wobei der Körper (110a-f) eine Erstreckung im Bereich von 10-100 mm, vorzugsweise 15-60 mm, in einer Richtung quer zu der Mittelachse (CA) aufweist.

15. Plattensystem (100, 200), umfassend:
ein Plattenelement (102a-f, 202a) nach einem der Ansprüche 1-14, und einen Abhängungsdraht (104a-104f, 104x, 204a), der freigebbar mit der Drahtverriegelung (114a-f) zur Abhängung des Plattenelements (102a-f, 202a) gekoppelt ist.

## Revendications

1. Élément de tuile (102a-f, 202a) comprenant :
une tuile (102a-f, 202a) présentant une première surface principale (107a-f, 207a), une seconde surface principale opposée (108a-f, 208a), et au moins une surface de bord latéral (109a-f, 209a) s'étendant entre la première surface principale (107a-f, 207a) et la seconde surface principale (108a-f, 208a), et
un élément d'ancrage (106a-f, 206a) associé à une seule surface parmi la première surface principale (107a-f, 207a) et la seconde surface principale (108a-f, 208a) ou à une seule surface de bord latéral (109a-f, 209a) de l'élément de tuile (102a-f, 202a) l'élément d'ancrage (106a-f, 206a) comprenant un corps (110a-f) supportant un verrou à fil (114a-f),
l'élément d'ancrage (106a-f, 206a) étant disposé dans la tuile (102a-f, 202a) de telle sorte que l'élément d'ancrage (106a-f, 206a) et son verrou à fil (114a-f) soient en retrait dans la tuile (102a-f, 202a) et qu'un orifice d'accès (118a-f) du verrou à fil (114a-f) devienne accessible depuis la première surface principale associée (107a-f, 207a), la seconde surface principale (108a-f, 208a) ou l'une des surfaces de bord latéral (109a-f, 209a) de la tuile (102a-f, 202a), et l'élément d'ancrage (106a-f, 206a) étant disposé dans la tuile (102a-f, 202a) par moulage, pressage ou insertion dans une fente de la tuile (102a-f, 202a).

2. Élément de tuile (102a-f, 202a) selon la revendication 1, dans lequel le verrou à fil (114a-f) définit un canal de verrou à fil interne (115a-f) se terminant dans l'orifice d'accès (118a-f) à une première extrémité et dans un orifice de sortie (117a-d) à une seconde extrémité, et le corps (110a-f) définit un canal de corps interne (105a-f),
le canal de corps (105a-f) étant adjacent à l'orifice de sortie (117a-d) et étant configuré pour guider un fil de suspension (104a-104f, 104x, 204a) à travers le corps (105a-f), lequel fil de suspension (104a-104f, 104x, 104a) a été passé à travers le verrou à fil (114a-f) et introduit dans le canal de corps (110a-f).

3. Élément de tuile (102a-f, 202a) selon la revendication 2, dans lequel le canal de corps (105a-f) est configuré pour guider le fil de suspension (104a-104f, 104x, 204a) à travers le corps (110a-f) de sorte que le fil de suspension (104a-104f, 104x, 104a) soit dévié dans une direction vers un côté supérieur (116a-f) du corps (110a-f).

4. Élément de tuile (102a-f, 202a) selon la revendication 3, dans lequel le canal de corps (105a-f) est configuré pour dévier le fil de suspension (104a-104f, 104x, 204a) avec un rayon de courbure dans la plage de 3 à 40 mm.

5. Élément de tuile (102a-f, 202a) selon la revendication 2, dans lequel le canal de corps (105a-f) est configuré pour guider le fil de suspension (104a-104f, 104x, 204a) à travers le corps (110a-f) de sorte que le fil de suspension (104a-104f, 104x, 204a) soit guidé dans une direction vers un côté inférieur (113e) du corps (110a-f).

6. Élément de tuile (102a-f, 202a) selon l'une quelconque des revendications précédentes, dans lequel le verrou à fil (114a-f) est logé à l'intérieur du corps (110a-f).

7. Élément de tuile (102a-f, 202a) selon l'une quelconque des revendications 1 à 5, dans lequel le verrou à fil (114a-f) comprend un élément de libération incliné (119a-f) faisant saillie au-delà d'une surface supérieure (116a-f) du corps (110a-f) et étant muni de l'orifice d'accès (118a-f).

8. Élément de tuile (102a-f, 202a) selon l'une quelconque des revendications précédentes, dans lequel le corps (110a-f) est muni d'une saillie externe s'étendant latéralement (112a-c, 112e-f).

9. Élément de tuile (102a-f, 202a) selon la revendication 8, dans lequel la saillie externe s'étendant latéralement (112a-c, 112e-f) comprend un élément choisi dans le groupe constitué d'une bride (112c), d'une barbe (112a), d'une broche (112b) et d'une saillie inclinée.

10. Élément de tuile (102a-f, 202a) selon l'une quelconque des revendications précédentes, dans lequel une partie du corps (110a-f) a une section transversale effilée telle que vue dans un plan coïncidant avec un axe longitudinal du corps (110a-f).

11. Élément de tuile (102a-f, 202a) selon l'une quelconque des revendications précédentes, dans lequel le corps (110a-f) est pressé dans la tuile (102a-f, 202a) et a une section transversale facilitant le pressage de l'élément d'ancrage (106a-f, 206a) dans la tuile (102a-f, 202a).

12. Élément de tuile (102a-f, 202a) selon l'une quelconque des revendications 1 à 10, dans lequel le corps (110a-f) est moulé dans la tuile (102a-f, 202a) et a une section transversale s'opposant au retrait de l'élément d'ancrage (106a-f, 206a) hors de la tuile (102a-f, 202a) et/ou au pressage de l'élément d'ancrage (106a-f, 206a) dans la tuile (102a-f, 202a).

13. Élément de tuile (102a-f, 202a) selon l'une quelconque des revendications précédentes, dans lequel la tuile (102a-f, 202a) comprend un matériau choisi dans le groupe constitué par les fibres minérales, les fibres de bois, les fibres textiles, les fibres polymères, les fibres métalliques, le gypse, le béton, le bois, le métal, les plastiques, les matériaux cimentaires, les matériaux géopolymères ou leurs combinaisons.

14. Élément de tuile (102a-f, 202a) selon la revendication 1, dans lequel le corps (110a-f) a une extension dans l'intervalle de 10 à 150 mm, de préférence 15 à 100 mm, le long de son axe central (CA), et le corps (110a-f) a une extension dans l'intervalle de 10 à 100 mm, de préférence 15 à 60 mm, dans une direction transversale à l'axe central (CA).

15. Système de tuile (100, 200) comprenant :
un élément de tuile (102a-f, 202a) selon l'une quelconque des revendications 1 à 14, et
un fil de suspension (104a-104f, 104x, 204a) couplé de manière amovible au verrou à fil (114a-f) pour suspendre l'élément de tuile (102a-f, 202a).
